# EUROPÄISCHE PATENTSCHRIFT

(11) **EP 0 974 172 B1**
(45) Veröffentlichungstag und Bekanntmachung des Hinweises auf die Patenterteilung: **09.01.2002**
(21) Anmeldenummer: 98928155.5
(22) Anmeldetag: 07.04.1998
(51) Int. Cl.: H01R 9/05

(54) **VORRICHTUNG ZUM BEFESTIGEN VON ELEKTRISCHEN LEITUNGEN**
DEVICE FOR FIXING ELECTRICAL LINES
DISPOSITIF POUR LA FIXATION DE LIGNES ELECTRIQUES

(30) Priorität: 11.04.1997 DE 19715070
(43) Veröffentlichungstag der Anmeldung: 26.01.2000
(73) Patentinhaber: JACOB GMBH ELEKTROTECHNISCHE FABRIK, 71394 Kernen im Remstal/Württ. (DE)
(72) Erfinder: FEKETITSCH, Herbert, D-73579 Schechingen (DE)
(74) Vertreter: Schmitt, Meinrad, Dipl.-Ing.
(86) Internationale Anmeldenummer: DE9800983
(87) Internationale Veröffentlichungsnummer: WO9847203

(56) Entgegenhaltungen:
- EP-A- 0 598 261
- DE-A- 3 803 593
- DE-U- 9 000 964
- GB-A- 2 138 220

## Beschreibung

Die vorliegende Erfindung betrifft eine *Vorrichtung zum Befestigen von elektrischen Leitungen, welche eine Schirmung für elektromagnetische Verträglichkeit (EMV) aufweisen, mit einem Aufnahmekörper und einer Kontaktvermittlereinrichtung, wobei die Kontaktvermittlereinrichtung innerhalb des Aufnahmekörpers angeordnet ist und durch die Kontaktvermittlereinrichtung eine elektrische Verbindung zwischen der Schirmung und dem Aufnahmekörper herstellbar ist, wobei die Schirmung im Betriebszustand mittels eines radial nach innen wirkenden Spannelements zwischen der Kontaktvermittlereinrichtung und dem Aufnahmekörper kraftschlüssig festgelegt, insbesondere verklemmt, ist.*

Elektromagnetische Verträglichkeit (EMV) von Geräten oder Leitungen spielt in Anbetracht der zunehmenden Verwendung von sich gegenseitig durch Störstrahlungen beeinflussenden elektrischen oder elektronischen Geräten und Maschinen im gewerblichen wie im privaten Bereich eine immer größere Rolle.

Mit einer Schirmung ausgestattete elektrische Leitungen verhindem das Aussenden elektromagnetischer Strahlung, da über die Schirmung die bspw. vom Gerät oder der Baugruppe ausgestrahlte Störstrahlung sicher zum Nullpotential abgeleitet wird. EMV- gerechte Leitungsinstallationen umfassen Kabelverschraubungen, welche eine elektrische Verbindung zwischen der Schirmung und dem Gerätegehäuse ermöglichen.

Aus der Praxis ist bspw. eine Kabelverschraubung bekannt, die zur elektrischen Verbindung zwischen der Schirmung und dem Aufnahmekörper innerhalb des Aufnahmekörpers mit einer Kontaktvermittlereinrichtung ausgestattet ist. Die Kontaktvermittlereinrichtung umfaßt zwei Konusringe und einen endlosen Federring. Beim Anziehen der Druckschraube wirken die beiden Konusringe radial nach innen gerichtet auf den Federring. Der Federring verjüngt sich dadurch im Durchmesser und kontaktiert die Schirmung des durchgeführten Kabels, dessen Außenmantel im Kontaktbereich entfernt worden ist. Eine eventuelle elektromagnetische Störstrahlung wird vom metallischen Aufnahmekörper über die metallischen Konusringe und den metallischen Federring zur Schirmung und letztlich zum Nullpotential geleitet

Problematisch ist bei dieser Vorrichtung, daß der Kontakt zur Schirmung in mechanischer Hinsicht lediglich durch Anlage des Federrings an der Schirmung hergestellt wird. Schon ein geringes Nachlassen des durch die Druckschraube auf die Konusringe ausgeübten Druckes die kann zu einer Unterbrechung des Kontakts führen, da sich der Durchmesser des Federrings wieder vergrößert. Zudem ist die Herstellung und die Montage der bekannten Vorrichtung bzw. EMV-Kabelverschraubung aufgrund der drei Bauteile - nämlich zwei Konusringe und ein Federring - recht aufwendig.

*Aus der EP 0 598 261 A2 ist für das Problem der Sicherstellung des elektrischen Kontakts zwischen Schirmung und Aufnahmekörper dahingehend eine Lösung gefunden, daß die Schirmung in direktem Kontakt mit dem Aufnahmekörper steht und zwischen Kontaktvermittlereinrichtung und und elektrisch leitendem Aufnahmekörper verklemmt ist. Hierzu wird Schirmgeflecht freigelegt, sodann die Kontaktvermittlereinrichtung aufgeschoben, dann das Geflecht umgebogen und die Verklemmung mittels Aufnahmekörper und Spannelement durchgeführt. Die Verklemmung erfolgt ausschließlich in radialer Richtung zur Längsachse der Verschraubung. Die Schirmung muß zunächst aufwendig um die Kontaktvermittlereinrichtung umgebogen werden, so daß ein erhöhter Montageaufwand zur Verbindung des Kabels mit der Kabelverschraubug insgesamt vorliegt. Der Aufnahmekörper bzw. die Schraubhülse weist keine Stirnseite auf.*

*Ausgehend von dem aus der EP 0 598 261 A2 bekannten Stand der Technik liegt der Erfindung die Aufgabe zugrunde, eine Vorrichtung der in Rede stehenden Art anzugeben, die funktionssicher ist, geringe Herstellungskosten verursacht und außerdem den Montageaufwand insgesamt verringert.*

Die voranstehende Aufgabe wird durch die Merkmale des Patentanspruches 1 gelöst. Danach ist eine Vorrichtung der in Rede stehenden Art derart ausgestaltet, daß *die vom Spannelement verursachte Kraftbeaufschlagung auf die Kontaktvermittlereinrichtung koaxial zur Längsachse des Aufnahmekörpers gerichtet ist, so daß die Schirmung gegen die Stimseite des Aufnahmekörpers gepreßt ist.*

*Erfindungsgemäß ist zunächst grundsätzlich erkannt worden, daß der Montageaufwand verringert werden kann, wenn keine Umbiegung der Schirmung nach der Abisolierung des Kabels in Anpassung an die Kontaktvermittlereinrichtung erfolgen muß. Weiter ist erkannt worden, daß ein Umbiegen der Schirmung nicht erforderlich ist, wenn die Kontaktvermittlereinrichtung vom Spannelement nicht nur radial mit Kraft beaufschlagt wird, sondern auch koaxial. Durch die koaxial gerichtete Kraftbeaufschlagung wird die Kontaktvermittlereinrichtung zur Schirmung bewegt, welche allmählich gegen die Stimseite des Aufnahmekörpers gepreßt und hierdurch festgelegt wird. Die Vorbereitung des Kabels könnte sich bspw. auf das Freilegen der Schirmung beschränken, wobei dann an der Kontaktvermittlereinrichtung Eingriffelemente vorgesehen sind, die das Geflecht so verformen, daß genügend Material zum Verklemmen zur Verfügung steht. Alternativ könnte die Schirmung einfach zurückgeschoben werden und eine Wulst ausbilden, gegen die die Kontaktvermittlereinrichtung - ohne besondere Eingriffelemente - koaxial gepreßt wird. Jedenfalls sind die sich aus dem des gattungsbildenden Standes der Technik ergebenden, den Montageaufwand erhöhenden Schirmungsvorbereitungsschritte* *Entflechten, Nach-Hinten-Biegen, Abschneiden der Schirmung bei der beanspruchten Lehre zu Gunsten eines geringeren Montageaufwandes und damit einer kostengünstigeren Herstellung sowie unter Gewährleistung der Funktionssicherheit der beanspruchten Vorrichtung eliminiert.*

Eine besonders wirksame Verbindung zwischen der Kontaktvermittlereinrichtung und der Schirmung wird hergestellt, wenn die Kontaktvermittlereinrichtung in das Geflecht der Schirmung eingreift und dieses gegen die Innenoberfläche preßt und dabei quasi zusammendrückt. Wenn der Außenmantel der Leitung entfernt und die Schirmung lediglich bloßgelegt ist, sind an der Kontaktvermittlereinrichtung besondere Eingriffelemente notwendig, die das Geflecht so verformen, daß genügend Material zur Verfügung steht, welches zwischen Kontaktvermittlereinrichtung und Aufnahmekörper verklemmt werden kann.

Von besonderem Vorteil im Hinblick auf eine einfach gestaltete Kontaktvermittlereinrichtung ohne besondere Eingriffelemente wird die Schirmung nach der Entfernung des Außenmantels der Leitung zurückgeschoben, so daß sie eine Wulst ausbildet. Die Wulst erstreckt sich senkrecht zur Längsachse der Leitung und parallel zur Stirnseite des Aufnahmekörpers und bietet eine gute Angriffsfläche für die Kontaktvermittlereinrichtung.

Um die Klemmverbindung zwischen der Kontaktvermittlereinrichtung und dem Aufnahmekörper unter Zwischenschaltung der Schirmung zu erzeugen, wird das in bekannter Weise zum Aufnahmekörper gehörende Spannelement festgezogen, wobei die Kontaktvermittlereinrichtung mit Druck beaufschlagt wird.

Bei dem Spannelement handelt es sich gemäß einem bevorzugten Ausführungsbeispiel um eine Hutmutter mit Innengewinde, welche an ihrem, vom übrigen Aufnahmekörper abgewandten Ende eine in Richtung dieses Endes hin konvergierende Innenausgestaltung aufweist. Insbesondere durch diese Ausgestaltung kommt zusätzlich zu der radial nach innen gerichteten Druckbeaufschlagung der Kontaktvermittlereinrichtung noch *die erfindungsgemäße* koaxial zur Längsachse des Aufnahmekörpers gerichtete Druckbeaufschlagung der Kontaktvermittlereinrichtung *hinzu.* Durch die koaxial, zumindest parallel zur Längsachse gerichtete Druckbeaufschlagung wird die Kontaktvermittlereinrichtung zur Schirmung bewegt, welche infolge der konvergierenden Innenausgestaltung allmählich gegen die Stimseite des Aufnahmekörpers gepreßt und hierdurch festgelegt wird. Alternativ zu einer konvergiernden Innenausgestaltung der Hutmutter wäre auch eine stufenförmige Querschnittsverengung möglich. Des weiteren könnte statt einer Hutmutter auch eine Hülse oder Kappe Verwendung finden, die mit schräg oder senkrecht zur Längsachse wirkenden Druckschrauben versehen sind und innen eine sonstwie geartete Ausgestaltung aufweisen, die eine Bewegung der Kontaktvermittlereinrichtung parallel zur Längsachse, in Richtung zur Stimseite des Aufnahmekörpers bewirkt.

Die Kontaktvermittlereinrichtung ist herstellungstechnisch und im Hinblick auf die Handhabung in einfacher Weise - nämlich als ein einstöckiger, im wesentlichen rohrförmiger Einsatz - ausgebildet Die gesamte erfindungsgemäße Vorrichtung weist gemäß einem bevorzugten Ausführungsbeispiel im wesentlichen nur zwei Komponenten auf - zum einen den Aufnahmekörper mit dem Spannelement und zum anderen den rohrförmigen Einsatz.

Im Hinblick darauf, daß ein als Hutmutter ausgebildetes Spannelement ein Innengewinde aufweist, welches auf das Außengewinde des übrigen Aufnahmekörpers aufgeschraubt wird und daher unterschiedliche Innenquerschnitte vorliegen, weist die Kontaktvermittlereinrichtung einen ersten Abschnitt mit einem auf das Spannelement abgestimmten Außenquerschnitt und einen zweiten Abschnitt mit einem auf den übrigen Aufnahmekörper abgestimmten Außenquerschnitt auf.

Innerhalb des Bereichs des Spannelementes könnte ein Dichtring vorgesehen sein, welcher sich zwischen der Leitung und dem ersten Abschnitt der Kontaktverrnittlereinrichtung erstreckt. Für den Dichtring könnte die Kontaktvermittlereinrichtung eine besondere Ausgestaltung aufweisen, wobei die voranstehend erläuterte Druckbeaufschlagung koaxial bzw. parallel zur Längsachse auch einer besonders wirksamen Abdichtung förderlich ist. Nach einer Ausgestaltung der erfindungsgemäßen Vorrichtung könnte der einen geringeren Innenquerschnitt aufweisende zweite Abschnitt als Anschlag für den auf dem ersten Abschnitt sitzenden Dichtring dienen. Der Anschlag könnte nun in Form einer spitzwinkligen, umlaufenden Ausnehmung, Nut oder Kehle gestaltet sein, wobei das vorzugsweise spitzwinklig zulaufende freie Ende der Ausnehmung sich im Betriebszustand in den Dichtring bohrt und diesen gegen das Spannelement preßt, während ihrerseits die Pressung die Anlage des Dichtrings an den benachbarten Flächen intensiviert und andererseits ein geringer Teil an verdrängtem Dichtringmaterial sich in der Ausnehmung erstrecken kann.

Zweckmäßigerweise sind die Innenquerschnitte des zweiten Abschnitts der Kontaktvermittlereinrichtung und des Dichtrings auf den Außenquerschnitt der Leitung derart abgestimmt, daß zumindest während der Montage ein geringes Spiel vorhanden ist, daß die Bewegbarkeit der Leitung relativ zur Kontaktvermittlereinrichtung und ggf. zum Dichtring gewährleistet. Damit ein gleichmäßiges Aufschieben der erfindungsgemäßen Vorrichtung auf die Leitung erfolgen kann, fluchten die Innenoberflächen vom Dichtring und vom zweiten Abschnitt zueinander.

Im Hinblick auf die sichere und dauerhafte Fixierung der Schirmung hat es sich als besonders vorteilhaft erwiesen, daß der der mit der Stirnseite gegen die Schirmung und den Aufnahmekörper zu pressende Endbereich des zweiten Abschnitts der Kontaktvermittlereinrichtung zur Innenoberfläche des Aufnahmekörpers radial beabstandet ist. Durch die geringe Querschnittsfläche des Endbereiches erhöht sich der Betrag der zu übertragenden Kraft. Damit jedoch die Kontaktvermittlereinrichtung eine durchweg ausreichende Stabilität aufweist, sind dem zweiten Abschnitt an seiner Außenoberfläche Verstärkungselemente zugeordnet, welche durch die Innenoberfläche des Aufnahmekörpers geführt sind. Ein weiterer Vorteil, der sich aus der Beabstandung des Endbereichs des zweiten Abschnitts der Kontaktvermittlereinrichtung ergibt, besteht darin, daß sich im Betriebszustand zumindest ein geringer Teil der Schirmung in die Beabstandung hinein erstreckt und somit auch die innere Seitenwandung des Aufnahmekörpers kontaktiert wird. Da das Metallgeflecht der Schirmung plastisch verformt wird, wenn der Endbereich gegen die innere Stirnwand des Aufnahmekörper gepreßt wird und dazu noch ein Teil der Innenoberfläche der Seitenwandung des Aufnahmekörpers bleibend kontaktiert wird, ist eine Kontaktfläche geschaffen, welche dauerhaft den Aufnahmekörper kontaktiert, so daß sämtliche inneren und äußeren Störstrahlungen sicher abgeleitet werden können.

Die Kontaktvermittlereinrichtung könnte des weiteren an ihrer Außenoberfläche eine Drehsicherung aufweisen, welche mit dem Aufnahmekörper bzw. dessen Innenoberfläche zusammenwirkt. Bevorzugt wird die Drehsicherung durch ein stufenmäßig abragendes Teil am zweiten Abschnitt der Kontaktvermittlereinrichtung ausgebildet, welcher in eine Nut am Aufnahmekörper eingreift und ein Verdrehen der Kontaktvermittlereinrichtung im Aufnahmekörper um die Längsachse wirksam ausschließt.

In materialmäßiger Hinsicht bestehen der Aufnahmekörper und das Spannelement in bekannter Weise aus leitendem Material, nämlich Metall. Die Kontaktvermittlereinrichtung wird im Hinblick auf die Materialkosten bevorzugt aus Kunststoff gefertigt.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des angeführten Ausführungsbeispiels der Erfindung werden auch im allgemeinen bevorzugte Ausgestaltungen und Weiterbildungen der Lehre erläutert. In der Zeichnung zeigen
- Fig. 1: in teilweise längsgeschnittener Darstellung eine Vorderansicht eines Ausführungsbeispiels der erfindungsgemäßen Vorrichtung,
- Fig. 2: eine Seitenansicht des in Fig. 1 gezeigten Ausführungsbeispiels,
- Fig. 3: in vergrößerter Darstellung einen Ausschnitt aus Fig. 1, wobei sich die Kontaktvermittlereinrichtung im rein schematisch veranschaulichten Betriebszustand befindet und
- Fig. 4: in explosionsartiger Darstellung die Vorderansichten der einzelnen Bauteile des Gegenstandes aus Fig. 1.

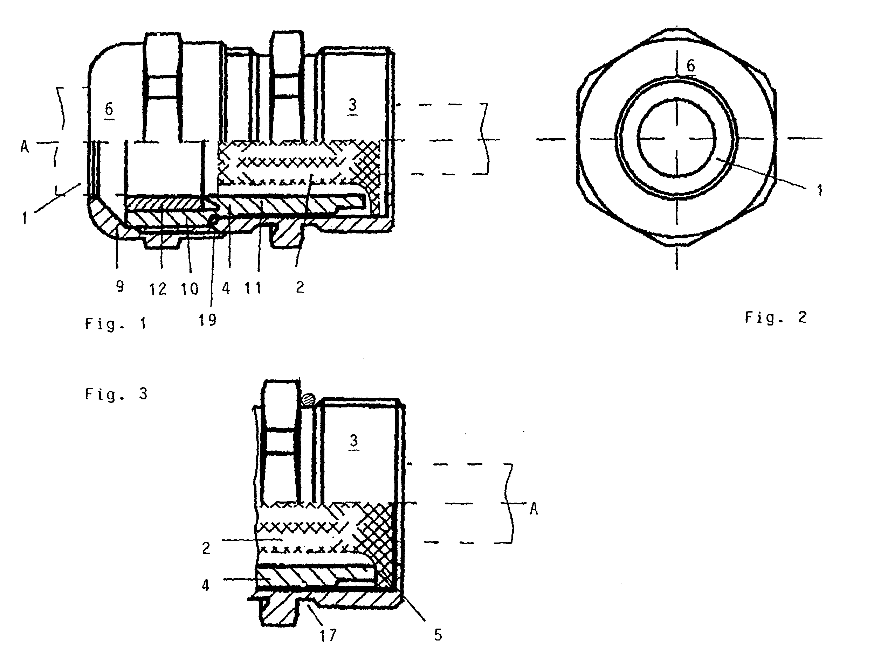

In den Fig. 1, 3 und 4 ist eine Vorrichtung zum Befestigen einer teils gestrichelt dargestellten elektrischen Leitung 1 mit nicht näher bezeichneten, teils nur gestrichelt angedeuteten Kabein gezeigt. Die Leitung 1 weist eine Schirmung 2 für elektromagnetische Verträglichkeit (EMV) auf. Die Vorrichtung umfaßt einen Aufnahmekörper 3 und eine Kontaktvermittlereinrichtung 4, welche innerhalb des Aufnahmekörpers 3 angeordnet ist und grundsätzlich dazu da ist, eine elektrische Verbindung zwischen der Schirmung 2 und dem Aufnahmekörper 3 herzustellen.

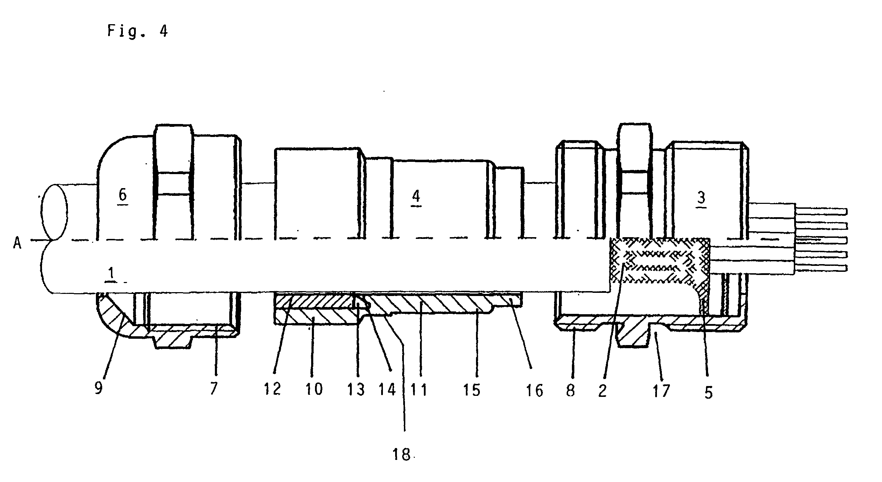

Aus Fig. 3 ergibt sich, daß die Schirmung 2 im Betriebszustand zwischen der Kontaktvermittlereinrichtung 4 und dem Aufnahmekörper 3 kraftschlüssig festgelegt, in diesem Ausführungsbeispiel verklemmt, ist. Dabei ist in Fig. 3 nur rein schematisch angedeutet, daß die Kontaktvermittlereinrichung 4 in das Geflecht der Schirmung 2 eingreift und zur Kontaktherstellung gegen die Innenoberfläche des Aufnahmekörpers 3 preßt. Insbesondere bildet die Schirmung 2 eine Wulst 5 aus, an der die Kontaktvermittlereinrichtung 4 angreift. Die Wulst 5 wird nach Entfernung des Außenmantels der Leitung 1 durch Aufstreifen oder Zurückschlagen der Schirmung 2 erhalten.

Der Aufnahmekörper 3 umfaßt ein Spannelement 6, das im hier gezeigten Ausführungsbeispiel als Hutmutter vorliegt. Das Spannelement 6 weist ein in Fig. 4 mit 7 bezeichnetes Innengewinde auf, das auf ein entsprechendes Außengewinde 8 des Aufnahmekörper 3 aufgeschraubt wird, wobei die Kontaktvermittlereinrichtung 4 zur Erzeugung der Klemmwirkung im Betriebszustand mit Kraft beaufschlagt wird. Zur Kraftbeaufschlagung der Kontaktvermittlereinrichtung 4 in koaxialer Richtung zur im Betriebszustand gemeinsamen Längsachse A der erfindungsgemäßen Vorrichtung weist das Spannelement 6 an seinem, vom übrigen Aufnahmekörper 3 abgewandten Ende einen in Richtung dieses Endes hin konvergierenden Abschnitt 9 auf. Der Abschnitt 9 preßt die Kontaktvermittlereinrichtung 4 bei fortschreitender Verschraubung des Spannelements 6 mit dem Aufnahmekörper 3 allmählich auf die Wulst 5. Das Spannelement 6 verursacht außerdem in bekannter Weise eine bezüglich der Längsachse A radial nach innen gerichtete Kraftbeaufschlagung der Kontaktvermittlereinrichtung 4.

Die Kontaktvermittlereinrichtung 4 ist im wesentlichen als rohrförmiger Einsatz ausgebildet, der einen ersten Abschnitt 10 mit einem auf das Spannelement 6 abgestimmten Außenquerschnitt und einen zweiten Abschnitt 11 mit einem auf den Aufnahmekörper 3 abgestimmten Außenquerschnitt aufweist. Die Innenquerschnitte der beiden Abschnitte 10 und 11 differieren. Auf dem größeren Innenquerschnitt des ersten Abschnitts 11 sitzt ein Dichtring 12, dessen Innenquerschnitt mit dem des zweiten Abschnitts 11 fluchtet und wie dieser auf den Außenquerschnitt der Leitung 1 abgestimmt ist.

Aus den Fig. 1 und 4 ist ersichtlich, daß im Übergangsbereich vom ersten Abschnitt 10 zum zweiten Abschnitt 11 eine spitzwinklige Ausnehmung 13 ausgebildet ist, deren spitzwinklig zulaufendes freies Ende 14 sich im Betriebszustand in den Dichtring 12 bohrt und diesen gegen das Spannelement 6 preßt, während sich verdrängtes Dichtringmaterial in der Ausnehmung 13 erstrecken kann. An der Außenoberfläche des zweiten Abschnitts 11 der Kontaktvermittlereinrichtung 4 sind des weiteren eine in Fig. 4 dargestellte Drehsicherung 18, Verstärkungselemente 15 sowie ein Endbereich 16 vorgesehen. Der Endbereich 16 wird mit der Stirnseite gegen die Schirmung 2 und den Aufnahmekörper 3 gepreßt und ist zur Innenoberfläche des Aufnahmekörpers 3 radial beabstandet. Die Verstärkungselemente 15 stützen sich im Zusammenbauzustand gegen die Innenoberfläche des Aufnahmekörpers 3 ab. Die Drehsicherung 18 greift im zusammengebauten Zustand der Bauteile in eine hier nicht gezeigte Aussparung an der Innenoberfläche des Aufnahmekörpers 3 ein und verhindert so ein Verdrehen der Kontaktvermittlereinrichtung 4 im Aufnahmekörper 3

Zur Abdichtung zwischen der Kontaktvermittlereinrichtung 4 und dem Aufnahmekörper 3 ist des weiteren ein in Fig. 1 dargestellter O-Ring 19 vorgesehen, der seitens der Kontaktvermittlereinrichtung 4 an der Außenoberfläche des dort abgestuften Übergangsbereiches zwischen erstem Abschnitt 10 und zweitem Abschnitt 11 angeordnet ist. Das freie Ende des das Außengewinde 8 aufweisenden Abschnittes des Aufnahmekörpers 3 preßt im Betriebszustand den O-Ring 19 in die Stufe, die durch den größeren Außenquerschnitt des ersten Abschnitts 10 gegenüber dem kleineren Außenquerschnitt des zweiten Abschnittes 11 ausgebildet ist.

Zur Abdichtung zwischen Am Außenumfang des Aufnahmekörper 3 ist des weiteren eine Nut 17 zur Aufnahme eines O-Ringes vorgesehen.

Hinsichtlich weiterer, in den Figuren nicht gezeigter Merkmale wird auf den allgemeinen Teil der Beschreibung verwiesen.

Abschließend sei darauf hingewiesen, daß die erfindungsgemäße Lehre nicht auf das voranstehend erörterte Ausführungsbeispiel eingeschränkt ist. Vielmehr sind bspw. die unterschiedlichsten Ausbildungen der zwischen der Schirmung und dem Aufnahmekörper wirkenden Kontaktvermittlereinrichtung möglich.

## Patentansprüche

1. Vorrichtung zum Befestigen von elektrischen Leitungen (1), welche eine Schirmung (2) für elektromagnetische Verträglichkeit (EMV) aufweisen, mit einem Aufnahmekörper (3) und einer Kontaktvermittlereinrichtung (4), wobei die Kontaktvermittlereinrichtung (4) innerhalb des Aufnahmekörpers (3) angeordnet ist und durch die Kontaktvermittlereinrichtung (4) eine elektrische Verbindung zwischen der Schirmung (2) und dem Aufnahmekörper (3) herstellbar ist, wobei die Schirmung (2) im Betriebszustand mittels eines radial nach innen wirkenden Spannelements (6) zwischen der Kontaktvermittlereinrichtung (4) und dem Aufnahmekörper (3) kraftschlüssig festgelegt, insbesondere verklemmt, ist,
**dadurch gekennzeichnet, daß** die vom Spannelement (6) verursachte Kraftbeaufschlagung auf die Kontaktvermittlereinrichtung (4) koaxial zur Längsachse (A) des Aufnahmekörpers (3) gerichtet ist, so daß die Schirmung (2) gegen die Stirnseite des Aufnahmekörpers (3) gepreßt ist.

2. Vorrichtung nach Anspruch 1, **dadurch gekennzeichnet, daß** die Kontaktvermittlereinrichung (4) in das Geflecht der Schirmung (2) eingreift und zur Kontaktherstellung gegen die Innenoberfläche des Aufnahmekörpers (3) preßt

3. Vorrichtung nach Anspruch 1 oder 2, **dadurch gekennzeichnet, daß** die Schirmung (2) eine Wulst (5) ausbildet, an der die Kontaktvermittlereinrichtung (4) im Betriebszustand angreift.

4. Vorrichtung nach einem der Ansprüche 1 bis 3, **dadurch gekennzeichnet, daß** das Spannelement (6) als Hutmutter ausgebildet ist und die Hutmutter an ihrem, vom übrigen Aufnahmekörper (3) abgewandten Ende eine in Richtung dieses Endes hin konvergierende Innenausgestaltung aufweist.

5. Vorrichtung nach einem der Ansprüche 1 bis 4, **dadurch gekennzeichnet, daß** die Kontaktvermittlereinrichtung (4) als im wesentlichen rohrförmiger Einsatz ausgebildet ist

6. Vorrichtung nach einem der Ansprüche 1 bis 5, **dadurch gekennzeichnet, daß** die Kontaktvermittlereinrichtung (4) einen ersten Abschnitt (10) mit einem auf das Spannelement (6) des Aufnahmekörpers (3) abgestimmten Außenquerschnitt und einen zweiten Abschnitt (11) mit einem auf den übrigen Aufnahmekörper (3) abgestimmten Außenquerschnitt aufweist.

7. Vorrichtung nach Anspruch 6, **dadurch gekennzeichnet, daß** am Innenquerschnitt des ersten Abschnitts (10) ein Dichtring (12) angeordnet ist

8. Vorrichtung nach Anspruch 7, **dadurch gekennzeichnet, daß** im Übergangsbereich vom ersten Abschnitt (10) zum zweiten Abschnitt (11) eine vorzugsweise spitzwinklige Ausnehmung (13) ausgebildet ist deren vorzugsweise spitzwinklig zulaufendes freies Ende (14) sich im Betriebszustand in den Dichtring (12) bohrt und diesen gegen das Spannelement (6) preßt, während sich verdrängtes Dichtringmaterial in der Ausnehmung (13) erstreckt.

9. Vorrichtung nach einem der Ansprüche 6 bis 8, **dadurch gekennzeichnet, daß** der Innenquerschnitt des zweiten Abschnitts (11) und ggf. ebenso der des Dichtrings (12) auf den Außenquerschnitt der Leitung (1) abgestimmt ist, ggf. sind.

10. Vorrichtung nach einem der Ansprüche 6 bis 9, **dadurch gekennzeichnet, daß** der zweite Abschnitt (11) an seiner Außenoberfläche Verstärkungselemente (15) aufweist.

11. Vorrichtung nach einem der Ansprüche 6 bis 9, **dadurch gekennzeichnet, daß** die Kontaktvermittlereinrichtung, insbesondere der zweite Abschnitt (11), an der Außenoberfläche eine Drehsicherung (18) aufweist, welche mit dem Aufnahmekörper (3) zusammenwirkt

12. Vorrichtung nach einem der Ansprüche 6 bis 11, **dadurch gekennzeichnet, daß** der mit der Stirnseite gegen die Schirmung (2) und den Aufnahmekörper (3) zu pressende Endbereich (16) des zweiten Abschnitts (11) zur Innenoberfläche des Aufnahmekörpers (3) radial beabstandet ist

13. Vorrichtung nach Anspruch 12, **dadurch gekennzeichnet, daß** sich im Betriebszustand zumindest ein geringer Teil der Schirmung in die Beabstandung hinein erstreckt.

14. Vorrichtung nach einem der Ansprüche 1 bis 13, **dadurch gekennzeichnet, daß** die Kontaktvermittlereinrichtung (4) aus Kunststoff besteht und daß der Aufnahmekörper (3) mit dem Spannelement (6) aus elektrisch leitendem Material besteht

## Claims

1. Apparatus for securing electrical cables (1), which have a screen (2) for electromagnetic compatibility (EMC), having a retaining body (3) and a contact-maker device (4), in which case the contact-maker device (4) is arranged inside the retaining body (3) and an electrical connection can be produced between the screen (2) and the retaining body (3) by means of the contact-maker device (4), the screen (2), in the operating state, being connected in a force-fitting manner, in particular being clamped, between the contact-maker device (4) and the retaining body (3) by means of a tightening element (6) which acts radially inwards,
**characterized in that**, the force which is applied to the contact-maker device (4) by the tightening element (6) is directed coaxially with respect to the longitudinal axis (A) of the retaining body (3), so that the screen (2) is pressed against the end face of the retaining body.

2. Apparatus according to Claim 1, **characterized in that** the contact-maker device (4) engages in the mesh of the screen (2) and presses against the inner surface of the retaining body (3) in order to make contact.

3. Apparatus according to Claim 1 or 2, **characterized in that** the screen (2) forms a bead (5) on which the contact-maker device (4) acts in the operating state.

4. Apparatus according to one of Claims 1 to 3, **characterized in that** the tightening element (6) is in the form of a union nut and, at its end facing away from the rest of the retaining body (3), has an internal design which converges in the direction of this end.

5. Apparatus according to one of Claims 1 to 4, **characterized in that** the contact-maker device (4) is designed as an essentially tubular insert.

6. Apparatus according to one of Claims 1 to 5, **characterized in that** the contact-maker device (4) has a first section (10) with an external cross section matched to the tightening element (6) of the retaining body (3) and a second section (11) with an external cross section matched to the rest of the retaining body (3).

7. Apparatus according to Claim 6, **characterized in that** a sealing ring (12) is arranged on the internal cross section of the first section (10).

8. Apparatus according to Claim 7, **characterized in that** a recess (13) which preferably has an acute angle is formed in the junction region from the first section (10) to the second section (11) and whose free end (14), which preferably runs to an acute angle, bores into the sealing ring (12) in the operating state and presses the latter against the tightening element (6), while sealing ring material that has been displaced extends into the recess (13).

9. Apparatus according to one of Claims 6 to 8, **characterized in that** the internal cross section of the second section (11) and, possibly, that of the sealing ring (12) as well is or are matched to the external cross section of the cable (1).

10. Apparatus according to one of Claims 6 to 9, **characterized in that** the second section (11) has reinforcing elements (15) on its outer surface.

11. Apparatus according to one of Claims 6 to 9, **characterized in that** the contact-maker device, in particular the second section (11), has an anti-rotation device (18) on the outer surface, which interacts with the retaining body (3).

12. Apparatus according to one of Claims 6 to 11, **characterized in that** that end region (16) of the second section (11) whose end face is to be pressed against the screen (2) and the retaining body (3) is at a radial distance from the inner surface of the retaining body (3).

13. Apparatus according to Claim 12, **characterized in that**, in the operating state, at least a small portion of the screen extends into the space.

14. Apparatus according to one of Claims 1 to 13, **characterized in that** the contact-maker device (4) is composed of plastic, and **in that** the retaining body (3), together with the tightening element (6), is composed of electrically conductive material.

## Revendications

1. Dispositif de fixation pour des câbles électriques (1), qui présentent un blindage (2) de compatibilité électromagnétique (CEM), muni d'un corps de réception (3) et d'un dispositif médiateur de contact (4), le dispositif médiateur de contact (4) étant disposé à l'intérieur du corps de réception (3) et une liaison électrique pouvant être établie par le biais du dispositif médiateur de contact (4) entre le blindage (2) et le corps de réception (3), le blindage (2) en situation fonctionnelle étant fixé par adhérence, notamment coincé, entre le dispositif médiateur de contact (4) et le corps de réception (3) au moyen d'un élément de serrage (6) radial agissant dans le sens radial vers l'intérieur, **caractérisé en ce que** la force exercée par l'élément de serrage (6) sur le dispositif médiateur de contact (4) est dirigée dans le sens coaxial par rapport à l'axe longitudinal (A) du corps de réception (3) de manière à ce que le blindage (2) soit comprimé contre la face avant du corps de réception (3).

2. Dispositif selon la revendication 1, **caractérisé en ce que** le dispositif médiateur de contact (4) pénètre dans la tresse du blindage (2) et exerce une pression contre la surface intérieure du corps de réception (3) afin d'établir le contact.

3. Dispositif selon la revendication 1 ou 2, **caractérisé en ce que** le blindage (2) prend la forme d'un bourrelet (5) sur lequel le dispositif médiateur de contact (4) a prise en situation fonctionnelle.

4. Dispositif selon l'une des revendications 1 à 3, **caractérisé en ce que** l'élément de serrage (6) est réalisé sous la forme d'un écrou borgne dont l'extrémité opposée au reste du corps de réception (3) présente une configuration intérieure convergente en direction de cette extrémité.

5. Dispositif selon l'une des revendications 1 à 4, **caractérisé en ce que** le dispositif médiateur de contact (4) est réalisé sous la forme d'une pièce essentiellement tubulaire.

6. Dispositif selon l'une des revendications 1 à 5, **caractérisé en ce que** le dispositif médiateur de contact (4) présente une première portion (10) dont la section extérieure est adaptée à l'élément de serrage (6) du corps de réception (3) et une deuxième portion (11) dont la section extérieure est adaptée au reste du corps de réception (3).

7. Dispositif selon la revendication 6, **caractérisé en ce qu'**une bague d'étanchéité (12) est disposée sur la section intérieure de la première portion (10).

8. Dispositif selon la revendication 7, **caractérisé en ce que** dans la zone de transition entre la première portion (10) et la deuxième portion (11) est formé un creux (13) de préférence en angle aigu dont l'extrémité convergente libre (14) de l'angle de préférence aigu pénètre dans la bague d'étanchéité (12) en situation fonctionnelle et comprime celle-ci contre l'élément de serrage (6), alors que le matériau déplacé de la bague d'étanchéité s'étend dans le creux (13).

9. Dispositif selon l'une des revendications 6 à 8, **caractérisé en ce que** la section intérieure de la deuxième portion (11) et, le cas échéant, également celle de la bague d'étanchéité (12) sont éventuellement adaptées à la section extérieure du câble (1).

10. Dispositif selon l'une des revendications 6 à 9, **caractérisé en ce que** la deuxième portion (11) présente des éléments de renfort (15) sur sa section extérieure.

11. Dispositif selon l'une des revendications 6 à 9, **caractérisé en ce que** le dispositif médiateur de contact, notamment la deuxième portion, présente sur sa surface extérieure un dispositif de sécurité anti-torsion (18) qui agit conjointement avec le corps de réception (3).

12. Dispositif selon l'une des revendications 6 à 11, **caractérisé en ce que** la zone d'extrémité (16) de la deuxième portion (11) à comprimer avec la face avant contre le blindage (2) et le corps de réception (3) est écartée dans le sens radial de la surface intérieure du corps de réception (3).

13. Dispositif selon la revendication 12, **caractérisé en ce qu'**au moins une petite partie du blindage s'étend dans l'écart en situation fonctionnelle.

14. Dispositif selon l'une des revendications 1 à 13, **caractérisé en ce que** le dispositif médiateur de contact (4) est en matière plastique et que le corps de réception (3) ainsi que l'élément de serrage (6) sont en matériau conducteur d'électricité.
